# EUROPEAN PATENT SPECIFICATION

(11) **EP 0 941 592 B1**
(45) Date of publication and mention of the grant of the patent: **22.06.2005**
(21) Application number: 97910478.3
(22) Date of filing: 27.10.1997
(51) Int. Cl.: H04L 12/56, H04Q 11/04

(54) **ROUTING OF PACKETS IN A TELECOMMUNICATIONS SYSTEM**
WEGESUCHE FÜR PAKETE IN EINEM FERNMELDESYSTEM
ACHEMINEMENT DE PAQUETS DANS UN SYSTEME DE TELECOMMUNICATIONS

(30) Priority: 29.10.1996 FI 964354
(43) Date of publication of application: 15.09.1999
(73) Proprietor: Nokia Corporation, 02150 Espoo (FI)
(72) Inventor: HULKKONEN, Matti, FIN-02600 Espoo (FI)
(74) Representative: Ruuskanen, Juha-Pekka
(86) International application number: PCT/FI1997/000655
(87) International publication number: WO 1998/019428

(56) References cited:
- EP-A- 0 781 010
- WO-A-97/50276
- US-A- 5 633 866
- COMPUTER NETWORKS AND ISDN SYSTEMS, Volume 26, No. 11, July 1994, JEAN-YVES LE BOUDEC et al., "Connectionless Data Service in an ATM-Based Customer Premises Network".
- IBM TECHNICAL DISCLOSURE BULLETIN, Volume 36, No. 2, February 1993, "Memory Organization Scheme for the Implementation of Routing Tables in High Performance IP Routers", pages 151-153.
- PRENTICE-HALL, Section 6.5.5, 1996, A. TANENBAUM, "Computer Networks", page 553.
- INFOCOM, Volume 24-28, March 1996, (San Francisco, California), PETER NEWMAN et al., "Flow Labell IP:A Connectionless Approach to ATM", pages 1251-1260.
- DATA COMMUNICATIONS, Volume 25, No. 3, March 1996, ERICA ROBERTS, "Routing IP Over ATM:Safe at Any Speed", pages 45-46.

## Description

### Field of the Invention

The invention generally relates to packet transfer carried out in a packet-switched telecommunications network, particularly to the transfer of IP packets (IP, Internet Protocol) through an ATM network.

### Background of the Invention

IP is the most popular of the current network layer (third layer in the OSI model) protocols, mainly on account of the great popularity of the Internet, and in the future IP will probably be more and more popular. With the exponential growth of hosts connected to the Internet, the throughput of IP networks has become a bottleneck, and new ways are required to transfer IP traffic more rapidly than at present.

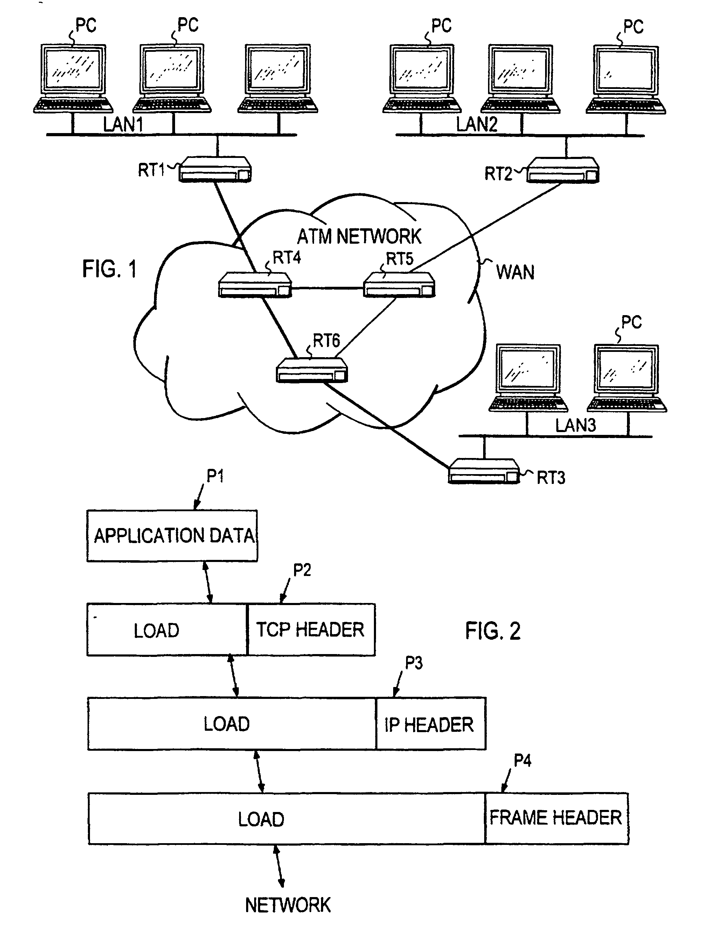

Figure 1 illustrates the typical structure of an IP network. In an office environment, personal computers PC or similar terminal equipment are connected to local area networks LAN1...LAN3, which are typically Ethernet networks. The local area networks in turn are interconnected with a backbone network (WAN, Wide Area Network) using routers (RT1... RT6). All computers that are in the same local area network have the same IP network address. When a data packet is sent from a computer connected to the local area network, the IP layer of the protocol stack of the sending computer checks whether the IP destination address is the same as its own IP network address. If the address is the same, no routers are necessary, but the packet is sent across the local area network to the computer having that destination address. If the IP network address of the destination is different than the IP network address of the sending computer, the computer forwards the packet to a router that transfers the packet further to another network.

The transmission links between the routers can be implemented with PDH or SDH technology or with the packet network technique, for instance (ATM, Frame Relay, X.25).

A router has two main functions: packet transfer and updating of routing tables. The packet transfer process in principle operates in such a way that the router first reads the network address of the destination from an incoming IP packet. Thereafter it finds from its routing table the output port associated with that address and sends the packet through said port to the next router. The packets are transferred from router to router until one of the routers finds that the destination address is the same as its own network address, in which case it sends the packet to the destination host.

With the increase in transfer rate requirements, new technologies have been introduced. ATM technology is used to an ever increasing degree as a backbone network technique, as it enables high-capacity backbone connections. In such a case, interfaces have been constructed in the routing nodes towards the ATM network; packets are first reconstructed from the cells arriving from the ATM network, the packets are routed, and thereafter the packets are again disassembled into ATM cells for transfer in the ATM network. A standard ATM adaptation layer (AAL) performs the disassembly and reconstruction of the IP packets. This will be described more closely hereinbelow to provide a background for the description of the invention which is to follow.

When a workstation in the above-described Ethernet local area network sends data to a workstation in another local area network, the data unit P1 formed by the application at the workstation is first encapsulated into a TCP packet P2, for instance, as shown in Figure 2 (provided that the protocol used in the transport layer is TCP, Transmission Control Protocol). The TCP packet is thereafter encapsulated into an IP packet P3 and the IP packet further into an Ethernet frame P4 which is sent across the local area network to a router connected thereto, having an interface towards the ATM network as well. This router removes the Ethernet segment and disassembles the IP packet into ATM cells in the ATM adaptation layer, as also disclosed in "Connectionless data services in an ATM-based customer premises network", J.Y. Le Boudec et al., Computer Networks and ISDN systems, Elsevier, 26-08-1994, and in the international patent application WO9750276. It is to be noted that the encapsulation may include insertions both in front and after the packet (so-called trailer).

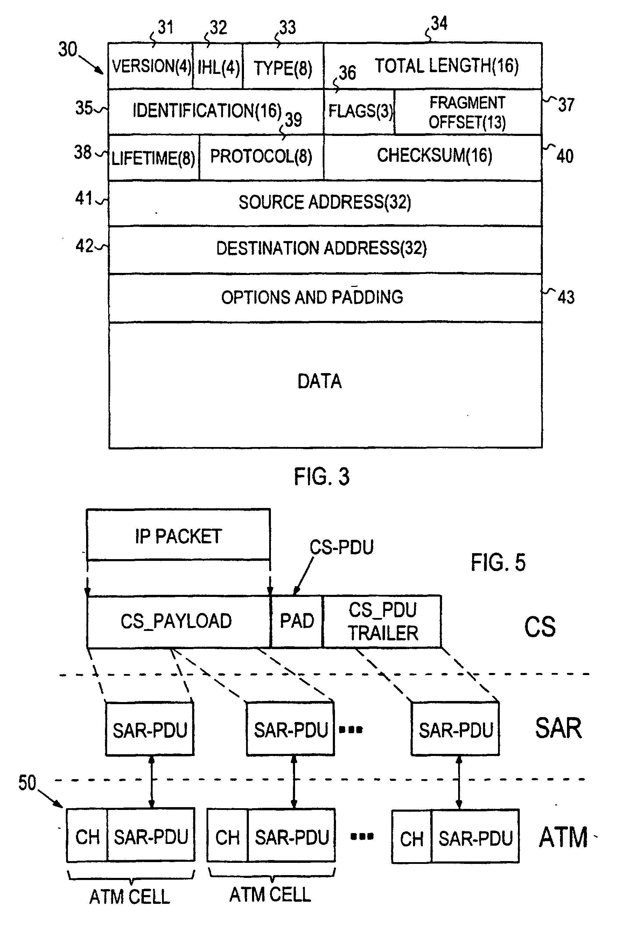

Figure 3 illustrates the structure of one IP packet 30 (i.e., IP datagram). The minimum size of the packet header is 20 bytes, which is divided into five four-byte "words", presented in consecutive lines in the figure. After the name of each field, the length of that field in bits is shown in the figure in parentheses. The header firstly comprises a 4-bit version field 31, indicating the IP version that is used. This is followed by the length field 32 (IHL, Internet Header Length), indicating the length of the header in 4-byte words. Type field 33 indicates the type of service, and field 34 the total length of the datagram, including the header. Identification field 35 is used to identify the IP packet in conjunction with the reconstruction of the packet. Flags field 36 allows the system to deduce whether a fragment of a disassembled packet is the last fragment of the original packet or not. The content of fragment offset field 37 in turn indicates in what location in the original packet the fragment belongs. Lifetime field 38 indicates the longest time that the packet may exist in the network. Each router through which the packet travels deducts from the value of this field. Protocol field 39 indicates the higher layer protocol of the data carried by the datagram (e.g. TCP). Field 40 contains a header checksum. Fields 41 and 42 are for the source and destination addresses, i.e. they indicate the address of the sending and receiving host in the form of 32-bit addresses. The address fields are followed by an option field 43 that is seldom used. The data to be transported in this field generally relates to network testing or troubleshooting; the data may for example define a given route that the datagram should travel. The field is supplemented with stuff bits when necessary, so that the number of bytes is divisible by four.

After the above-described header, the actual data in the IP packet begins. The length of the data field may vary, but its upper limit is bounded by the length of field 34, which means that the maximum length of the entire packet is 2¹⁶ bytes.

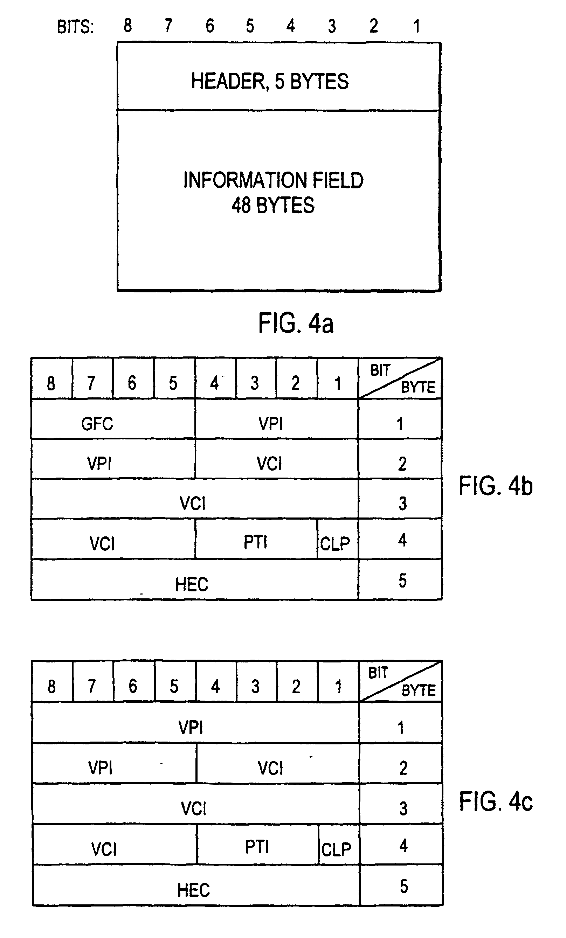

As stated previously, in the ATM network in accordance with Figure 1 the IP packets are transferred in the form of ATM cells. Figure 4a shows the basic structure of one cell to be transmitted in the ATM network. Each cell to be transmitted in the network comprises a 48-byte payload and a 5-byte header, but the precise structure of the header (the content of the header) is dependent on which part of the ATM network is being used in each case, as the ATM network architecture comprises a number of interfaces closely specified in the standards, and the header structure employed in the ATM cell is dependent on which interface (i.e., which part of the network) is concerned.

Figure 4b shows the cell header structure at the UNI interface (User-to-Network interface) of the ATM network, which is the interface between the ATM terminal equipment and the ATM node. Figure 4c in turn illustrates the cell header structure at the NNI interface (Network-to-Network Interface) of the ATM network, which is the interface between two ATM nodes, either within the network or between two networks.

The routing field of the cell header consists of the virtual path identifier (VPI) and the virtual channel identifier (VCI). In the header structure shown in Figure 4b, which is thus used at the subscriber terminal only, a total of 24 bits has been reserved for the routing field (VPI/VCI). In the header structure shown in Figure 4c, which is used in all other parts in the ATM network, 28 bits have been reserved for the routing field (VPI/VCI). As the name implies, the routing field serves as a basis for routing cells in the ATM network. Primarily in the inner parts of the network a virtual path identifier VPI is used, which in practice often determines to what physical connection the cell is to be routed. The virtual channel identifier VCI, on the other hand, is often used for routing merely at the boundary of the network. It is to be noted, however, that it is the VPI and VCI together that unambiguously define the route for the cell.

The other fields in the ATM cell header, as defined in the specifications, are
- GFC (Generic Flow Control), a field intended for traffic supervision at the subscriber terminal, not yet precisely defined,
- PTI (Payload Type Indicator), mainly used to distinguish network management cells from subscriber information cells, but it is possible to additionally differentiate the subscriber information cells according to whether a congestion has been detected on the route or not,
- CLP (Cell Loss Priority), used to prioritize cells as regards cell loss probability (largely corresponds to the DE bit in a Frame Relay Network),
- HEC (Header Error Control), header checksum.

Of these other fields, only the PTI field relates to the present invention. This field can be used for example for transferring virtual path and virtual channel -specific congestion messages. However, the invention utilizes another characteristic of the PTI field that will be described in detail hereinbelow.

In general, signals of various formats arrive at the ATM adaptation layer, and the task of the ATM adaptation layer is on the one hand to form these signals into the standard format required by the ATM network prior to their being passed on to the ATM network, and on the other hand to reconstruct these signals from the cells arriving from ATM networks prior to their being relayed further to the user or control interfaces. Different types of adaptation layers (AAL1...AAL5) have been standardized for different service classes (A...D). For example, AAL types 3, 4 and 5 offer transmission services for applications in which there is no time dependency between the source and the destination.

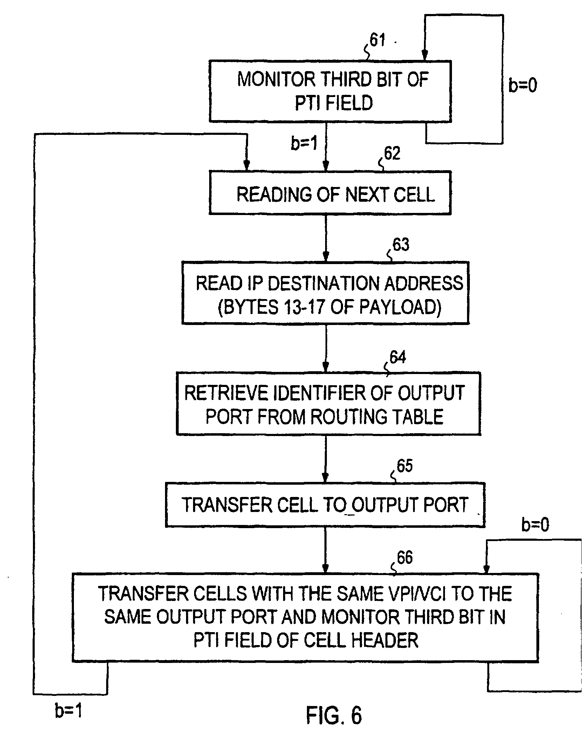

Figure 5 illustrates the segmentation of IP packets performed by AAL 5 into ATM cells and the reconstruction of packets from ATM cells, as it illustrates the operation of the ATM adaptation layer in the exemplary network shown in Figure 1. The ATM adaptation layer is generally divided into two sublayers, which are referred to by the abbreviations SAR (Segmentation and Reassembly Sublayer) and CS (Convergence Sublayer). The last-mentioned sublayer performs encapsulation/deencapsulation of user data units (for example IP packets) and control data. The frame produced as a result of the encapsulation performed by the CS sublayer is referred to as the CS-PDU (Convergence Sublayer Protocol Data Unit). The AAL 5 encapsulation is performed in such a way that a trailer portion is added to the user data unit (e.g. an IP packet), containing for instance an error check portion (CRC). The trailer portion has a length of 8 bytes. The length of the entire CS-PDU corresponds to a multiple of 48 bytes, which is obtained by adding when appropriate a padding field PAD having a length of 0...47 bytes between the trailer portion and the payload of the packet.

The SAR sublayer segments each CS-PDU in the transmit direction into segments of 48 bytes, which are referred to as the SAR-PDU (Segmentation and Reassembly Protocol Data Unit). In the receive direction, the CS-PDUs are formed by putting the SAR-PDUs together.

The ATM layer beneath the ATM adaptation layer is responsible for adding five-byte header fields CH (Figures 4b and 4c) into the SAR-PDUs to be transmitted, thus producing ATM cells 50 that are sent to the ATM network. The ATM network only processes the cell header, the 48-byte payload is not processed and not even read in the ATM network. In the receive direction, the ATM layer removes the headers from the cells and supplies the 48-byte payloads to the SAR sublayer for assembly.

When in the network of Figure 1 the routers send IP packets, they segment the packets into cells in the above manner and send the packets to an ATM transmission link. The router at the opposite end of the link reconstructs a packet from the cells in the above manner, makes a routing decision in the conventional manner on the basis of the IP address, and segments the packet again into cells for the next ATM link.

Normally the routing decision on the packets is made by software. When routing implemented with software is combined with the above-described packet segmentation and reconstruction, the operation of the ATM-based router network is slowed down considerably. This conventional routing method is also expensive to carry out.

To alleviate these drawbacks, a method has been developed that is termed IP switching. IP switching is based on the flow concept: a flow is a series of IP packets that are headed from (generally) the same source to the same destination. Hence, one flow (generally) comprises the IP packets whose source and destination addresses are the same. For example a TCP connection is a flow: when the TCP connection has been opened, a series of packets is sent from the source to the destination, In IP switching, router nodes identify the flows and request routers at the boundary of the network to furnish the packets of each flow with a unique flow identifier, e.g. a unique VPINCI identifier. When the packets pertaining to a given flow are provided with a unique VPI/VCI identifier, the routers within the network can carry out packet relay on a cell level, using a normal ATM switching. Hence, the routing need not go as far as the third layer (IP layer), but can be performed in the second layer (ATM layer).

The drawback of the last-mentioned prior art solution is, however, that it presupposes for all routers a capability to identify the flows and to transmit the flow information forward. Known routers are not capable of such flow control. Furthermore, the solution will produce additional traffic in the network, as the router must request the transmitting-end router to insert a flow identifier into the packets.

### Summary of the Invention

It is an object of the invention to remove the above drawbacks and to provide a solution that will improve the capacity of routers without, however, requiring any new flow control protocol to be applied.

This object is achieved with the solution defined in the independent claim.

The idea of the invention is to monitor the limit between two successive packets at a higher protocol layer on the basis of lower protocol layer data units and to read at the start of each respective packet the higher level address (packet address) from the lower protocol level data units. On this basis, routing is performed for the first data unit of the packet and thereafter the same routing is automatically applied to the next data units, providing that the lower level connection identifier included in the data units is the same as in the first data unit. Automatic routing is continued as long as the content of the data units having the same connection identifier indicates that the higher level packet is still in progress.

In the preferred embodiment of the invention, the lower-layer data units are ATM cells; thus the invention utilizes firstly the characteristic of the ATM adaptation layer according to which a bit in the cell header indicates whether the last cell formed from the packet is concerned. This bit is the third bit in the PTI field. Another feature utilized in the invention is that the AAL5 frame has no flow identification field that would enable multiplexing of cells using a single VPINCI identifier. Thus, one can be certain that all cells transferred over the same virtual connection prior to the cell indicating the end of the packet belong to the same packet.

On account of the solution in accordance with the invention, the throughput of the routers can be increased in that the need for segmenting and reconstructing packets is obviated. This is achieved with conventional routers. Hence, no extra flow control protocol is needed in the network, and thus also the routers remain simpler and cause no additional traffic in the network.

### Brief Description of the Drawings

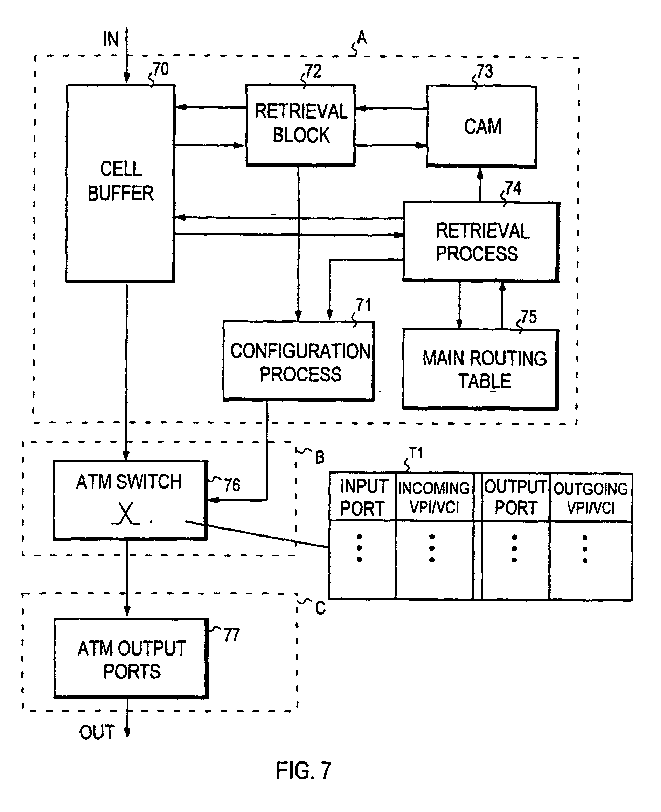

The invention and its preferred embodiments will be described in greater detail in the following with reference to Figures 6 and 7 by means of examples in accordance with the accompanying drawings, in which
- Figure 1: illustrates the environment in which the invention is used,
- Figure 2: illustrates forming of packets prior to their being sent to the network,
- Figure 3: illustrates the structure of an IP packet,
- Figures 4a...4c: illustrate the generic structure of an ATM cell,
- Figure 5: illustrates packet segmentation into ATM cells as performed by ATM adaptation layer 5 and reconstruction of packets from ATM cells,
- Figure 6: is a flow chart illustrating the method of the invention, and
- Figure 7: presents a functional block diagram of a router carrying out the method of the invention.

### Detailed Description of the Invention

In the solution in accordance with the invention, segmentation of IP packets is performed in a node at the boundary of the network in accordance with the above, and the ATM cells are sent to the ATM transmission link.

As stated previously, the last bit in the PTI field (bit number two in Figures 4a...4c) indicates when a new higher layer packet (IP packet) starts. When the bit is set to be 1, the last cell of the IP packet is concerned, in which case the next packet starts with the next non-idle cell. The PTI field has the value 000 or 010 when user data is concerned (no control data) and the cell is the first cell in the packet or a cell within the packet. On the other hand, the PTI field has the value 001 or 011 when user data is concerned and the cell is the last cell in the packet.

When a router in an ATM network receives ATM cells, the first cell of the IP packet can thus be found on the basis of the last bit of the PTI field. A router in accordance with the invention makes use of this feature. This will be described in the following with reference to Figure 6, which illustrates the operation of the router of the invention.

Initially the router monitors the value of the third bit in the PTI field in the incoming ATM cells over the VPI/VCI connection (step 61). Such monitoring is carried out as long as the value of that bit remains zero. Immediately when it is detected that the bit has been set to 1 for any virtual connection, it can be presumed that the next non-idle cell over that virtual connection is the first cell of a packet. Hence, the method can proceed to reading the next cell. After this cell has arrived, its IP destination address is read (step 63); this address is mapped, as can be seen from Figure 3, in segmentation in such a way that it always has a fixed location in the payload bytes 13-17 of the cell. On the basis of the destination address that has been read, the identifier of the output port associated with that address from the routing table is found (step 64) and the cell is transmitted to that output port (step 65). Thereafter the PTI field of the cells is monitored over said virtual connection and all cells are transmitted to the same output port as long as the third bit in the PTI field remains zero, i.e. as long as the packet is in progress (step 66). When it is detected that the third bit in the PTI field changes to 1, the method proceeds to reading the next non-idle cell in step 62.

Figure 7 illustrates one possible implementation of a packet switch in a router. The router comprises three successive blocks A, B, and C between input IN and output OUT. Block A defines the output port associated with the packet address, block B performs routing to the correct port. Block C is comprised of output ports, and for example a new VPINCI identifier for the next link can be formed therein.

For temporary storage of incoming cells, a cell buffer 70 is provisioned at the input of the router, the buffer reads the address of the incoming cell (VPI/VCI identifier and PTI field). When the cell buffer indicates to IP address retrieval block 72 that the first cell of a packet is concerned, the retrieval block reads the IP address from the cell and supplies the address to content addressable memory (CAM) 73. The content addressable memory is also termed an associative memory; it is a memory in which the storage locations are identified on the basis of their content. On the basis of the IP address, the memory 73 returns the address of the output port associated with the IP address to the retrieval block. The retrieval block supplies the identifier indicating the output port to a configuration process 71 that defines on the basis thereof an available outgoing VPINCI identifier and writes data on the output port and on the outgoing VPINCI identifier into the routing table (table T1) of the ATM switch 76 (in the line corresponding to the input port and the incoming VPI/VCI) identifier). The writing is performed once for each packet, and thus all cells that belong to the same packet (i.e., have the same VPI/VCI and the same input port) are switched to the same output port and receive the same outgoing VPINCI pair.

As long as the cell buffer 70 finds that the packet is still in progress and the cells have the same VPI/VCI identifier as the first cell in the packet, it transfers the cells directly to the ATM switch, which performs the routing on the basis of its routing table. The ATM switch is thus configured at the start of each packet, whereafter all cells in the packet are automatically switched to the correct output port.

The content addressable memory is used as a cache for the main routing table 75, for the purpose of accelerating the process. If the IP destination address is not found in the memory 73, the cells can be buffered and the output port may be sought by a conventional software retrieval process 74 directly from the main routing table 75. The content addressable memory is updated on the basis of the retrieval.

By the above-described method, routing of packets can be considerably accelerated, and the router may have maximum simplicity of configuration.

The examples set out above all relate to cases in which the protocol used at the network layer is IP, which is the most common of the protocols used at that layer. However, the solution in accordance with the invention is not restricted to IP, but can be used equally well in connection with any other (network layer or higher layer) protocol in which the packet has a standard-format address so that it will be found in the lower layer data units. Even though the solution in accordance with the invention is intended mainly for a network transferring ATM cells, the solution is not necessarily to be so limited either, but the lower layer may utilize any protocol in whose data units the limits between higher protocol layer data units (packets) can be distinguished.

In principle, it is also possible that the higher level address will not be found immediately in the first data unit (depending on the location of the address in the data packet), but the first data units must be stored until the higher layer address is found.

Even though the invention has been explained in the above with reference to examples in accordance with the accompanying drawings, it is to be understood that the invention is not restricted thereto, but it may be modified within the scope of the appended claims.

## Claims

1. A method for transferring data packets in a packet-switched telecommunications network comprising a plurality of routers (RT1...RT6), the method comprising:
segmenting data packets (30) into lower protocol layer data units (50) to be transferred from a router to another,
on the basis of the incoming data units (50) in a router, monitoring the occurrence of the limit between two successive data packets (30);
detecting the first data unit of a data packet;
reading a destination address of the data packet from the first data unit of the data packet;
seeking an output port associated with the destination address and routing the first data unit to that output port;
routing all other data units belonging to the same data packet with the first data unit directly to the same output port associated with the destination address;
**characterized in that** the last data unit of a first data packet is detected from a bit in a payload type indicator field in a header of the data unit indicating when the last data unit formed from the data packet is concerned and the next non-idle data unit is presumed to be the first data unit of a second data packet.

2. A method as claimed in claim 1, wherein said segmented data units are ATM cells, wherein the occurrence of the limit between two successive packets and the fact whether the packet is still in progress is monitored on the basis of the PTI field in the header of the incoming cells.

3. A method as claimed in claim 2, wherein the output port associated with the destination address is first retrieved from a content addressable memory (73) to which the destination address is provided as an input.

4. A router arrangement for transferring data packets in a packet-switched telecommunications network in which the data packets (30) are segmented into lower protocol layer data units (50) to be transferred from a router to another, the router arrangement comprising
- first reading means (70, 72), for reading the destination address of a data packet directly from the lower protocol layer data units in response to detection of the start of the data packet,
- second reading means (70) for reading the connection identifiers of incoming data units,
- monitoring means (70) for monitoring the occurrence of the limit between two successive packets on the basis of the incoming data units,
- defining means (74, 75) for defining the output port associated with the destination address that has been read,
- switching means (76) for routing data units to the desired output port,
- configuration means (71) for configuring the switching means at the start of each data packet in such a way that the data units belonging to the same data packet with the first data unit in the packet are routed directly to the same output port as said first data unit,
**characterized in that** the first reading means are configured to detect the last data unit of a first data packet from a bit in a payload type indicator field in a header of the data unit indicating when the last data unit formed from the data packet is concerned and to presume that the next non-idle data unit is the first data unit of a second data packet.

5. A router arrangement as claimed in claim 4, wherein the defining means comprise a routing table and a software retrieval process (74), wherein the defining means further comprise a content addressable memory (73) serving as a cache for the routing table.

## Patentansprüche

1. Verfahren zum Übermitteln von Datenpaketen in einem paketvermittelten Telekommunikationsnetzwerk mit einer Vielzahl von Leitweglenkungsknoten (RT1... RT6), mit den Schritten:
Segmentieren von Datenpaketen (30) in Dateneinheiten (50) niedrigerer Protokollschicht, die von einem Leitweglenkungsknoten zu einem anderen zu übermitteln sind,
Überwachen des Auftretens der Grenze zwischen zwei aufeinander folgenden Datenpaketen (30) auf Grundlage der ankommenden Dateneinheiten (50) in einem Leitweglenkungsknoten;
Erfassen der ersten Dateneinheit eines Datenpakets;
Lesen einer Zieladresse des Datenpakets aus der ersten Dateneinheit des Datenpakets;
Suchen eines Ausgabeanschlusses, der mit der Zieladresse in Zusammenhang steht, und Lenken der ersten Dateneinheit an diesen Ausgabeanschluss;
Lenken aller anderen Dateneinheiten, die zu dem gleichen Datenpaket wie die erste Dateneinheit gehören, direkt an den gleichen Ausgabeanschluss, der mit der Zieladresse in Zusammenhang steht;
**dadurch gekennzeichnet, dass** die letzte Dateneinheit eines ersten Datenpakets mittels eines Bits in einem Nutzlasttyphinweisfeld in einem Nachrichtenkopf der Dateneinheit erfasst wird, das darauf hinweist, wenn es sich um die letzte aus dem Datenpaket gebildete Dateneinheit handelt, und für die nächste, nicht ungenutzte Dateneinheit angenommen wird, dass sie die erste Dateneinheit eines zweiten Datenpakets ist.

2. Verfahren gemäß Anspruch 1, bei dem die segmentierten Dateneinheiten ATM-Zellen sind, wobei das Auftreten der Grenze zwischen zwei aufeinander folgenden Paketen und die Tatsache, ob das Paket noch im Gang ist, auf Grundlage des PTI-Felds im Nachrichtenkopf der ankommenden Zellen überwacht wird.

3. Verfahren gemäß Anspruch 2, bei dem der mit der Zieladresse in Zusammenhang stehende Ausgabeanschluss zuerst aus einem inhaltsadressierbaren Speicher (73) abgefragt wird, an den die Zieladresse als Eingabe geliefert wird.

4. Leitweglenkungsknotenanordnung zur Übermittlung von Datenpaketen in einem paketvermittelten Telekommunikationsnetzwerk, in dem die Datenpakete (30) in Dateneinheiten (50) niedrigerer Protokollschicht segmentiert werden, die von einem Leitweglenkungsknoten zu einem anderen zu übermitteln sind, mit
- einer ersten Leseeinrichtung (70, 72) zum Lesen der Zieladresse eines Datenpakets direkt aus den Dateneinheiten niedrigerer Protokollschicht in Erwiderung auf eine Erfassung des Beginns des Datenpakets,
- einer zweiten Leseeinrichtung (70) zum Lesen der Verbindungskennungen ankommender Dateneinheiten,
- einer Überwachungseinrichtung (70) zum Überwachen des Auftretens der Grenze zwischen zwei aufeinander folgenden Paketen auf Grundlage der ankommenden Dateneinheiten,
- einer Festlegungseinrichtung (74, 75) zum Festlegen des Ausgabeanschlusses, der mit der Zieladresse in Zusammenhang steht, die gelesen wurde,
- einer Vermittlungseinrichtung (76) zum Lenken von Dateneinheiten an den gewünschten Ausgabeanschluss,
- einer Konfigurationseinrichtung (71) zum Konfigurieren der Vermittlungseinrichtung zu Beginn jedes Datenpakets auf solche Weise, dass die Dateneinheiten, die zu dem gleichen Datenpaket wie die erste Dateneinheit in dem Paket gehören, direkt an den gleichen Ausgabeanschluss wie die erste Dateneinheit gelenkt werden,
**dadurch gekennzeichnet, dass** die erste Leseeinrichtung konfiguriert ist, die letzte Dateneinheit eines ersten Datenpakets mittels eines Bits in einem Nutzlasttyphinweisfeld in einem Nachrichtenkopf der Dateneinheit zu erfassen, das darauf hinweist, wenn es sich um die letzte aus dem Datenpaket gebildete Dateneinheit handelt, und anzunehmen, dass die nächste, nicht ungenutzte Dateneinheit die erste Dateneinheit eines zweiten Datenpakets ist.

5. Leitweglenkungsknotenanordnung gemäß Anspruch 4, bei der die Festlegungseinrichtung eine Leitweglenkungstabelle und einen Software-Abfrageprozess (74) aufweist, wobei die Festlegungseinrichtung zusätzlich einen inhaltsadressierbaren Speicher (73) aufweist, der als ein Zwischenspeicher für die Leitweglenkungstabelle dient.

## Revendications

1. Procédé de transfert de paquets de données dans un réseau de télécommunications commuté par paquets comprenant une pluralité de routeurs (RT1, ..., RT6), le procédé comprenant les étapes consistant à :
segmenter les paquets de données (30) en unités de données de couche de protocole inférieure (50) qui doivent être transférées d'un routeur à un autre ;
sur la base des unités de données qui entrent (50) dans un routeur, surveiller l'apparition de la limite entre deux paquets de données successifs (30) ;
détecter la première unité de données d'un paquet de données ;
lire une adresse de destination du paquet de données à partir de la première unité de données du paquet de données ;
rechercher un port de sortie associé, avec l'adresse de destination et acheminer la première unité de données vers ce port de sortie ;
acheminer toutes les autres unités de données appartenant au même paquet de données avec la première unité de données directement vers le même port de sortie associé à l'adresse de destination ;
**caractérisé en ce que** la dernière unité de données d'un premier paquet de données est détectée à partir d'un bit contenu dans un champ indiquant le type de charge utile dans un en-tête de l'unité de données, signalant le moment où la dernière unité de données formée à partir du paquet de données est concernée et que l'unité de données suivante qui est active est supposée être la première unité de données d'un deuxième paquet de données.

2. Procédé selon la revendication 1, dans lequel lesdites unités de données segmentées sont des cellules ATM, dans lequel l'apparition de la limite entre deux paquets successifs et le fait que le paquet est, ou non, encore en cours d'acheminement, est surveillée sur la base du champ PTI dans l'entête des cellules entrantes.

3. Procédé selon la revendication 2, dans lequel le port de sortie associé à l'adresse de destination est tout d'abord récupéré à partir d'une mémoire adressable par le contenu (73) à laquelle l'adresse de destination est fournie en tant qu'une entrée.

4. Dispositif de routeurs pour transférer des paquets de données dans un réseau de télécommunications commuté par paquets, dans lequel les paquets de données (30) sont segmentés en unités de données de couche de protocole inférieure (50) qui doivent être transférées d'un routeur à un autre, le dispositif de routeurs comprenant :
- des premiers moyens de lecture (70, 72) pour lire l'adresse de destination d'un paquet de données directement à partir des unités de données de couche de protocole inférieure en réponse à la détection du début du paquet de données ;
- des seconds moyens de lecture (70) pour lire les identifiants de connexion des unités de données entrantes ;
- des moyens de surveillance (70) pour surveiller l'apparition de la limite entre deux paquets de données successifs sur la base des unités de données entrantes ;
- des moyens de définition (74, 75) pour définir le port de sortie associé à l'adresse de destination qui a été lue ;
- des moyens de commutation (76) pour acheminer les unités de données vers le port de sortie souhaité ;
- des moyens de configuration (71) pour configurer les moyens de commutation au début de chaque paquet de données de telle façon que les unités de données appartenant au même paquet de données avec la première unité de données dans le paquet sont acheminées directement vers le même port de sortie que ladite première unité de données ;
**caractérisé en ce que** les premiers moyens de lecture sont configurés de façon à détecter la dernière unité de données d'un premier paquet de données à partir d'un bit contenu dans un champ indiquant le type de charge utile dans un en-tête de l'unité de données indiquant lorsque la dernière unité de données formée à partir du paquet de données est concernée, et de façon à supposer que l'unité de données suivante qui est active est la première unité de données d'un deuxième paquet de données.

5. Dispositif de routeurs selon la revendication 4, dans lequel les moyens de définition comprennent une table de routage et un processus de récupération de logiciel (74), dans lequel les moyens de définition comprennent en outre une mémoire adressable par le contenu (73) servant de cache pour la table de routage.
